# EUROPEAN PATENT APPLICATION

(11) **EP 3 564 897 A1**
(43) Date of publication of application: **06.11.2019**
(21) Application number: 17897243.6
(22) Date of filing: 25.12.2017
(51) Int. Cl.: G06Q 50/30, G06Q 10/04, G08G 1/123

(54) **DEMAND PREDICTION DEVICE**

(30) Priority: 27.02.2017 JP 2017034693
(71) Applicant: NTT Docomo, Inc., Tokyo 100-6150 (JP)
(72) Inventor: SUZUKI Ryohei, Tokyo 100-6150 (JP); FUJITA Masanori, Tokyo 100-6150 (JP); MAKISHIMA Akihito, Tokyo 100-6150 (JP); NOAMI Junko, Tokyo 100-6150 (JP)
(74) Representative: Viering, Jentschura & Partner mbB Patent- und Rechtsanwälte
(86) International application number: PCT/JP2017/046405
(87) International publication number: WO 2018/154958

(57) **Abstract**

Even in an unusual case, such as at occurrence of an event and the like, where a way a vehicle, such as a taxi, is used is different from that in a steady state, demand prediction for vehicle demand is performed with high accuracy.

A demand prediction device 10 is a device that performs demand prediction for taxi demand in accordance with a mesh, and includes an acquisition unit 12 configured to acquire number-of-people information including information relating to the number of people for each mesh at a plurality of times, a prediction model determination unit 13 configured to determine a prediction model to be used for demand prediction based on the acquired number-of-people information, a prediction unit 14 configured to perform demand prediction for taxi demand from the acquired number-of-people information by using the determined prediction model, and an output unit 15 configured to output information in accordance with a result of demand prediction.

## Description

### Technical Field

The present invention relates to a demand prediction device that performs demand prediction for vehicle demand, such as taxi demand, in accordance with a position.

### Background Art

Conventionally, demand prediction for taxi demand according to a position has been proposed. For example, Patent Literature 1 shows that prediction of demand for allocation of a taxi is performed based on information relating to an event, such as a place, an end time, the number of customers attracted, traffic regulation information and the like, in order to make a prediction at the time of occurrence of an event.

### Citation List

### Patent Literature

Patent Literature 1: Japanese Unexamined Patent Publication No. 2007-72784

### Summary of Invention

### Technical Problem

However, when an event occurs, it is conceivable that the number of people at a target position and a utilization rate of a taxi are different from those in a steady (normal, daily) state where no event occurs. Therefore, there is a possibility that demand prediction cannot be performed with high accuracy merely by using information relating to an event as shown in Patent Literature 1.

The present invention has been made in view of the above, and it is an object of the present invention to provide a demand prediction device capable of performing highly accurate demand prediction for vehicle demand even in an unusual case, such as when an event occurs, where a way of use of vehicles, such as a taxi, is different from that in a steady state.

### Solution to Problem

In order to achieve the above object, a demand prediction device according to an embodiment of the present invention is a demand prediction device that performs demand prediction for vehicle demand in accordance with a position. The demand prediction device includes an acquisition unit configured to acquire number-of-people information including information relating to the number of people at each position at a plurality of times, a prediction model determination unit configured to determine a prediction model to be used for demand prediction based on the number-of-people information acquired by the acquisition unit, a prediction unit configured to perform demand prediction for vehicle demand from the number-of-people information acquired by the acquisition unit by using the prediction model determined by the prediction model determination unit, and an output unit configured to output information in accordance with a result of demand prediction performed by the prediction unit.

In the demand prediction device according to an embodiment of the present invention, a prediction model to be used for demand prediction is determined based on time series number-of-people information, and demand prediction is performed. Therefore, according to the demand prediction device according to the embodiment of the present invention, it is possible to perform a demand prediction in accordance with the number-of-people information in consideration of a way a vehicle, such as a taxi, is used. That is, according to the demand prediction device according to the embodiment of the present invention, even in an unusual case, demand prediction for vehicle demand can be performed with high accuracy, not simply in consideration of an event to be held, but in accordance with a change in an actual number of people.

### Advantageous Effects of Invention

According to an embodiment of the present invention, a demand prediction can be performed in consideration of a way a vehicle, such as a taxi, is used in accordance with number-of-people information. That is, according to the embodiment of the present invention, even in an unusual case, demand prediction for vehicle demand can be performed with high accuracy, not simply in consideration of an event to be held, but in accordance with a change in an actual number of people.

### Brief Description of Drawings

FIG. 1 is a diagram showing a configuration of a demand prediction device according to an embodiment of the present invention.
FIG. 2 is a table showing an example of information acquired by the demand prediction device.
FIG. 3 is a graph showing a temporal change in an event population.
FIG. 4 is a phase estimation logic table stored in the demand prediction device.
FIG. 5 is a table showing an example of event data to which a session time label is provided.
FIG. 6 is a diagram schematically showing clustering performed in the demand prediction device.
FIG. 7 is a flowchart showing processing executed when a prediction model is generated in the demand prediction device according to the embodiment of the present invention.
FIG. 8 is a flowchart showing processing executed when demand prediction is performed in the demand prediction device according to the embodiment of the present invention.
FIG. 9 is a diagram showing a hardware configuration of the demand prediction device according to the embodiment of the present invention.

### Description of Embodiments

Hereinafter, an embodiment of a demand prediction device according to the present invention will be described in detail below with reference to the drawings. The same elements will be attached with the same reference signs in description of the drawings to omit duplicate description.

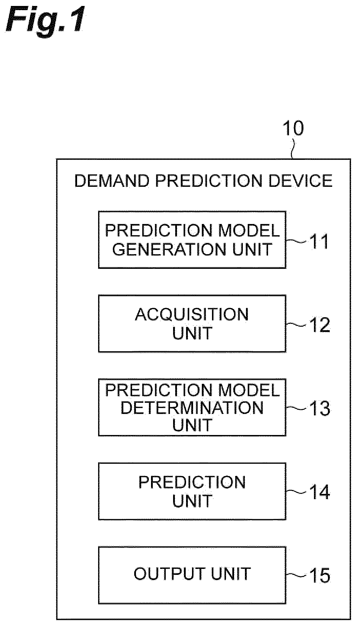

FIG. 1 shows a demand prediction device 10 according to the present embodiment. The demand prediction device 10 is a device (system) that performs demand prediction for vehicle demand in accordance with a position. In the present embodiment, it is assumed that the vehicle is a taxi. The demand prediction for taxi demand in accordance with a position is predicting at which position and to what degree taxis will be used (taken). In the present embodiment, a region for which demand prediction is performed is divided into square meshes, and to what degree taxis will be used, is predicted for each mesh and time. For example, one side of the mesh is 500 m. The time is in units of, for example, 10 minutes. For example, in the demand prediction in the present embodiment, to what degree taxis will be used 10 minutes after the present time is predicted for each mesh. However, a unit of demand prediction is not necessarily limited to the above. A result of the demand prediction performed by the demand prediction device 10 is provided to, for example, an operating company of a taxi, and used for determining a location for what is called a cruising operation, and the like.

In the present embodiment, the demand prediction device 10 detects whether or not an event occurs for each mesh and each time, and performs a demand prediction for taxi demand when it detects occurrence of an event. That is, the demand prediction device 10 performs demand prediction for taxi demand in an unusual case, which is at the time of occurrence of an event (at which prediction is difficult to perform by daily demand prediction), different from a steady state. The event in the present embodiment is an event in which many people gather, and is, for example, a concert, an exhibition, a sports game, or the like. Note that, in the present embodiment, occurrence of an event is considered as an example of an unusual case. However, occurrence of an unexpected phenomenon other than occurrence of an event may also be considered, as long as a situation of people in a mesh can be considered different from that in a steady state. Further, the demand prediction device 10 may perform demand prediction for taxi demand in a steady state in addition to the demand prediction for taxi demand in an unusual case.

The demand prediction device 10 is configured to include, for example, a computer such as a server device. The demand prediction device 10 may include a plurality of computers. The demand prediction device 10 can transmit and receive information to and from other devices via a network or the like. Information to be used for demand prediction, information indicating a result of demand prediction, and the like are transmitted to and received from other devices.

Next, functions of the demand prediction device 10 according to the present embodiment will be described. As shown in FIG. 1, the demand prediction device 10 includes a prediction model generation unit 11, an acquisition unit 12, a prediction model determination unit 13, a prediction unit 14, and an output unit 15.

The prediction model generation unit 11 is a functional unit that generates a plurality of prediction models to be used for demand prediction. The prediction model generation unit 11 acquires a plurality of pieces of number-of-people information for generating a model including information relating to the number of people for each mesh at a plurality of times, and demand information indicating a taxi demand amount for each mesh at times corresponding to the plurality of times. The prediction model generation unit 11 clusters the acquired number-of-people information for generating a model, and generates a prediction model from the number-of-people information for generating a model and the demand information for each cluster obtained by the clustering. The prediction model generation unit 11 identifies an inflow state indicating an inflow of people in a mesh in a plurality of times from the number-of-people information for generating a model, and identifies a range of the number-of-people information for generating a model to be used for generating a prediction model based on the identified inflow state. Specifically, the prediction model generation unit 11 generates a plurality of prediction models as described below.

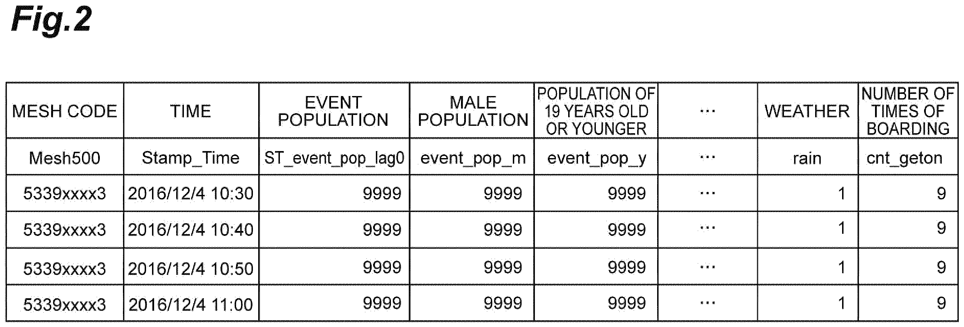

The prediction model generation unit 11 acquires number-of-people information for generating a model and demand information for each mesh, which are time series information. An example of information acquired by the prediction model generation unit 11 is shown in a table of FIG. 2. As shown in the table of FIG. 2, the information acquired by the prediction model generation unit 11 is information, in which a mesh code, time, various types of population, weather, and the number of times of boarding are associated. The mesh code is information for specifying a mesh, and is, for example, a character string of nine digits. The mesh code is preset for each mesh. The time is information indicating a time and is expressed by year, month, day, hour, and minute. In the present embodiment, a combination of a mesh and a time is called a cube. Data of one row in FIG. 2 corresponds to data of one cube.

The various types of population show the number of people located in the mesh. The various types of population include a model population, an event population, and an event population associated with demographics (attributes). The model population is population located in the mesh. The event population is information relating to a difference in population from a steady state (usual), and is, for example, a value obtained by subtracting a model population at the same time on the same day of a previous week from a model population of the mesh. The demographics are, for example, sex, age, and place of residence. The event population associated with the demographics, which refer to sex, is the event population for each men and women in the mesh. When age is referred to, the event population is for each of young people (19 years old or younger), mature people (20 to 49 years old) and middle aged people (over 50 years old) in the mesh. When place of residence is referred to, the event population is each of (people who has residence) in a municipality including the mesh, (people who has residence) in a specific area (for example, 23 wards of Tokyo), and (people who has residence) outside a specific area.

For example, information regarding various types of population of a cube can be obtained based on information indicating a position of a mobile communication terminal, such as a cellular phone or the like, and information regarding attributes of a user of the mobile communication terminal. For example, the prediction model generation unit 11 acquires information regarding various types of people of a cube from a server of a mobile communication carrier. Note that, if the information regarding the model population of a cube can be acquired, the event population can be calculated. Therefore, the prediction model generation unit 11 may acquire information regarding various types of model population of a cube from a server of a mobile communication carrier, and calculate and acquire various types of event population. In the present embodiment, demand prediction is performed based on the event population. That is, the above number-of-people information for generating a model is information regarding event population that shows a difference between a model population which is a value indicating the number of people for each mesh and event population at the same time on the same day of a previous week which is a predetermined reference value.

A difference in population is taken in the above manner for proper handling as information at the time of an event. When an event occurs in a target mesh or a neighboring mesh, it is considered that population of the mesh is increasing as compared with that in a steady state. By taking a difference, it is possible to reflect an influence of an event by excluding an influence of a change in population in a steady state. For this purpose, the difference may be a difference from an average value of the model population of a cube, instead of a difference from the model population at the same time on the same day of a previous week. Other than the above, time-series population data may be learned and filtered sequentially, and a short-term fluctuation component or the like may be used as the event population.

The weather is information indicating weather in the cube, and is, for example, an hourly rainfall amount (mm/h) in the mesh. For example, the prediction model generation unit 11 acquires information regarding an hourly rainfall amount from a server that provides information regarding weather. Information regarding an hourly rainfall amount to be acquired may be information relating to a regional range different from the above mesh. For example, the information may be information regarding a mesh of 1 km on each side. In that case, the prediction model generation unit 11 calculates an hourly rainfall amount of a mesh of 500 m on each side from the information.

The number of times of boarding is an actual value of the number of times of boarding a taxi in the cube. That is, the number of times of boarding is demand information indicating a taxi demand amount in the mesh. For example, the prediction model generation unit 11 acquires information (taxi probe) regarding the number of times of boarding from a server of a business operator of a taxi. Information regarding the number of times of boarding to be acquired may be information relating to a regional range different from the mesh described above. For example, the information may be information regarding a mesh of 100 m on each side. In that case, the prediction model generation unit 11 calculates the number of times of boarding of a mesh of 500 m on each side from the information.

The prediction model generation unit 11 acquires the above-described information at regular time intervals, for example, every 10 minutes, for a certain period, for example, several months.

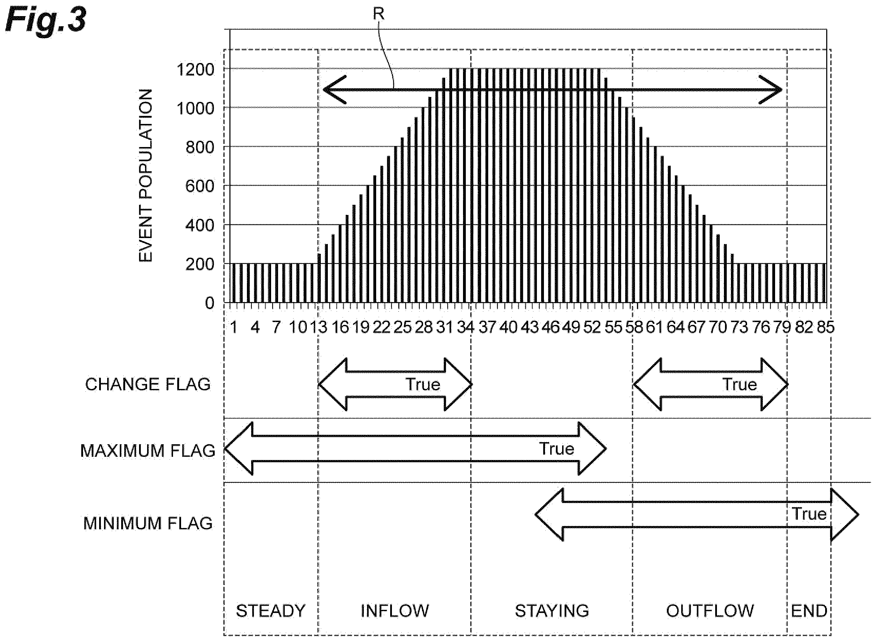

The prediction model generation unit 11 extracts information used for generating a prediction model from the acquired information. Specifically, the prediction model generation unit 11 extracts information, which is considered to be related to an event, from the acquired information as information used for generating a prediction model. FIG. 3 shows an example of the event population when an event occurs. In a graph of FIG. 3, a horizontal axis shows time and a vertical axis shows the event population. When an event occurs in the mesh or a neighboring mesh, population of the mesh increases due to the event. When an event occurs, population of the mesh changes in accordance with the progress of the event. As shown in FIG. 3, the change includes phases (processes) of inflow (increase, come), staying (balanced, stay), and outflow (decrease, go). In the present embodiment, a series of phases of the change is handled as one event session.

The prediction model generation unit 11 determines whether or not the acquired information of each cube is information constituting an event session. First, the prediction model generation unit 11 determines whether or not two conditions described below are satisfied for the information of each cube. The first condition is event population > event determination threshold value (event population). The event determination threshold value (event population) is preset and stored in the prediction model generation unit 11, and is, for example, 1000. The second condition is event population / model population = event population ratio > event determination threshold value (population ratio). The event determination threshold value (population ratio) is preset and stored in the prediction model generation unit 11, and is, for example, 30%. The prediction model generation unit 11 sets a cube that satisfies the above two conditions as a candidate for constituting an event session. Further, the prediction model generation unit 11 also sets cubes with the same mesh for a certain period, for example, twelve periods (two hours), after a cube that satisfies the above two conditions as candidates for constituting an event session.

The prediction model generation unit 11 handles, as a series of cubes, cubes with the same meshes at continuing times among the candidate cubes constituting an event session. The prediction model generation unit 11 assigns an event ID, which is information for identifying an event, to a series of cubes. The event ID is set based on, for example, a mesh code + an earliest time (YYYY-MM-DD HH:MM) of a series of cubes. The prediction model generation unit 11 excludes a series of cubes having a period length of a certain period, for example, 12 hours (72 periods) or longer, as noise data from a series of cubes.

The prediction model generation unit 11 determines, for each cube included in a series of cubes, whether the cube constitutes an event session and to which phase of an event session the cube corresponds. The prediction model generation unit 11 assumes that a cube at a head (at an earliest time) of a series of cubes as constituting an event session and also corresponding to an inflow phase. The prediction model generation unit 1 1 calculates a change flag, a maximum value flag, and a minimum value flag for subsequent cubes, as described below.

For each subsequent cube, the prediction model generation unit 11 calculates a change coefficient from the event population of the cube and the event population of cubes of the past 12 periods, which are cubes dating backward from the cube of the same mesh by 12 periods. The change coefficient is calculated by (standard deviation of the event population of the cube and the cubes of the past 12 periods) / (average value of the event population of the cube and the cubes of the past 12 periods). The prediction model generation unit 11 determines whether or not the change coefficient > the change threshold value is satisfied. The change threshold value is preset and stored in the prediction model generation unit 11, and is, for example, 0.09. When determining that the above condition is satisfied, the prediction model generation unit 11 sets the change flag to True (changed) for the cube concerned. When determining that the above condition is not satisfied, the prediction model generation unit 11 sets the change flag to False for the cube concerned.

The prediction model generation unit 11 determines whether or not the event population of the cube ≥ the maximum value of the event population of the cubes of the past 12 periods is satisfied. When determining that the above condition is satisfied, the prediction model generation unit 11 sets the maximum value flag to True for the cube. When determining that the above condition is not satisfied, the prediction model generation unit 11 sets the maximum value flag to False for the cube.

The prediction model generation unit 11 determines whether or not the event population of the cube ≤ the minimum value of the event population of the cubes of the past 12 periods is satisfied. When determining that the above condition is satisfied, the prediction model generation unit 11 sets the minimum value flag to True for the cube. When determining that the above condition is not satisfied, the prediction model generation unit 11 sets the minimum value flag to False for the cube.

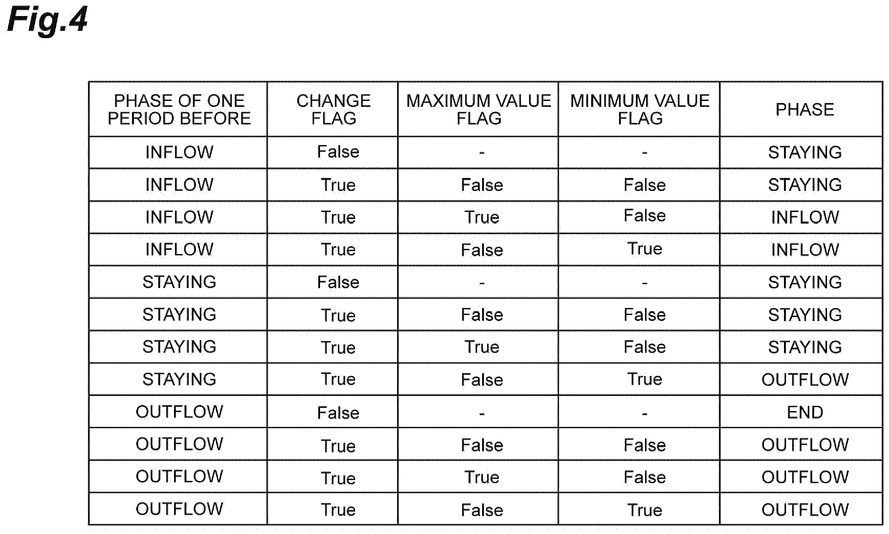

The prediction model generation unit 11 identifies a phase of the cube from a phase of a cube of one time before (one period before) in the same mesh, the change flag, the maximum value flag, and the minimum value flag calculated as described above. The phase is identified based on a phase estimation logic table shown in FIG. 4 which is preset and stored in the prediction model generation unit 11. In the phase estimation logic table shown in FIG. 4, the first column shows a phase of a cube one period before. The second to fourth columns show the change flag, the maximum value flag, and the minimum value flag of a cube to be identified. The fifth column shows a phase of a cube to be identified.

The prediction model generation unit 11 identifies a phase of the fifth column of a record (data of a row in the phase estimation logic table) corresponding to a phase of a cube of one time before (one period before) in the same mesh, the change flag, the maximum value flag, and the minimum value flag calculated as described above in the phase estimation logic table as a phase of a cube to be identified. For example, if a phase of one period before is inflow, the change flag is True, the maximum value flag is False, and the minimum value flag is False (corresponding to a record in the second row of the phase estimation logic table), a phase of a cube to be identified is identified as staying.

For each cube included in a series of cubes, the prediction model generation unit 11 sequentially identifies a phase from the second cube. The prediction model generation unit 11 assumes that cubes up to a cube of one time before (a cube whose phase is outflow) a cube whose phase is determined to be an end constitute an event session. The prediction model generation unit 11 identifies cubes constituting an event session as described above for all of a series of cubes. Information regarding cubes constituting an event session is referred to as event data. The graph of the event population of FIG. 3 shows a phase at each time and a range of times (range of event data) R of cubes constituting an event session.

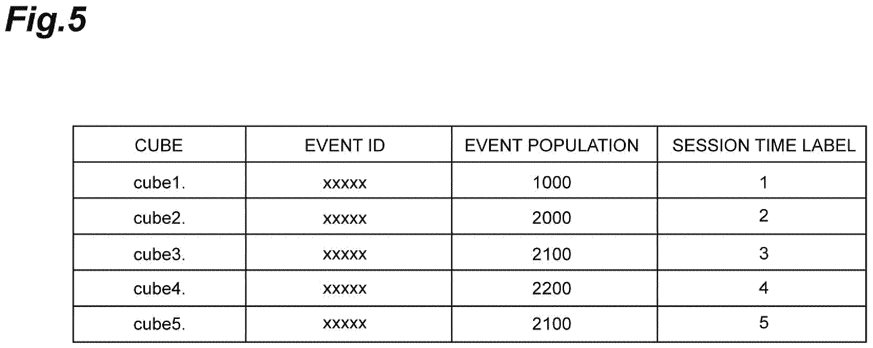

The prediction model generation unit 11 provides a session time label to a cube included in an event data. The prediction model generation unit 11 provides integers from 1 as the session time label to cubes included in an event data sequentially from a cube at an earliest time. FIG. 5 shows an example of an event data to which the session time label is provided.

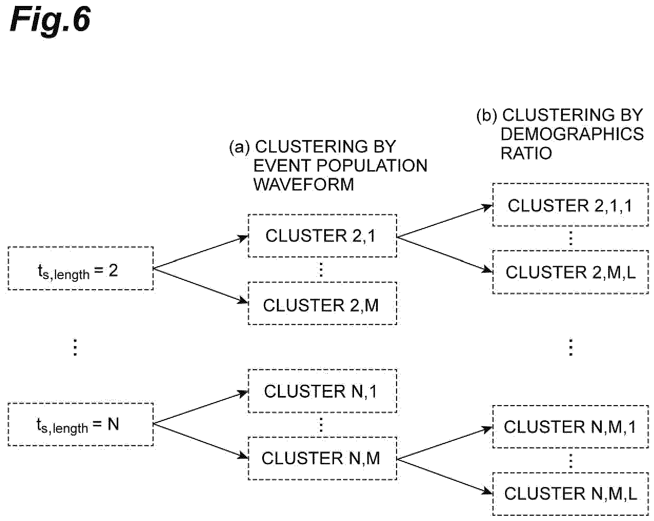

The prediction model generation unit 11 performs clustering of event data. In clustering, pieces of event data that are assumed to constitute one event session are handled as a set of data and clustered. Clustering is performed in a stepwise manner. FIG. 6 conceptually shows this clustering. The prediction model generation unit 11 divides event data for each period length of an event session (the number of cubes (times) included in the event data). In FIG. 6, t_{s,length} = 2 indicates a set of event data of an event session with a period length of 2, and tₛ,_{length} = N indicates a set of event data of an event session with a period length of N.

The prediction model generation unit 11 calculates demographics ratio data for performing clustering for each piece of event data. The demographics ratio data is, for example, a male population ratio, a young population ratio, a mature population ratio, and a municipality population ratio. The prediction model generation unit 1 1 calculates each of the above population ratios by dividing the sum of event population associated with the demographics of each cube included in event data by the sum of event population of each cube.

The prediction model generation unit 11 clusters event data for each period length of an event session based on an event population waveform which is the event population in time series of the event data (corresponding to (a) clustering by event population waveform in FIG. 6). For example, the prediction model generation unit 11 performs clustering using the Ward's method which is a hierarchical method. Specifically, when two clusters are merged, data that minimizes an increase amount of the within-groups sum of squares is collected.

Based on the demographics ratio data, the prediction model generation unit 11 further clusters event data included in the cluster obtained by the above clustering (corresponding to (b) clustering by demographics ratio in FIG. 6). For example, the prediction model generation unit 11 performs clustering using the Ward's method which is a hierarchical method like the clustering described above. Note that each of the above pieces of clustering is not necessarily performed by the Ward's method, and any clustering method can be used.

The prediction model generation unit 11 generates a prediction model from event data for each cluster obtained by the above clustering. For example, the prediction model predicts, from event data (explanatory variable) up to a time on the way in an event session, the number of times of boarding (objective variable) at a next time of a latest time among the times. That is, the prediction model is a prediction model that predicts the number of times of boarding (objective variable) in a period n + 1 from data (explanatory variable) up to a period n in the event session (where n is the number of times in an event session). The prediction model generation unit 11 generates a plurality of prediction models corresponding to which time data is obtained for one cluster. That is, the prediction model generation unit 11 generates a prediction model for each time of an event session. Note that a value of a session time label is used as a time used in generation of the prediction model. For example, the prediction model generation unit 11 generates a prediction model by machine learning.

Specifically, the prediction model is, for example, a model that predicts the number of times of boarding at a target time in a target mesh by using data described below as an explanatory variable. The explanatory variables are event population data, population difference data, data of the number of times of boarding in a previous period, weather data, and demographics pattern data. The event population data is event population one period before a target time in a target mesh. The population difference data is a value obtained from event population one period before a target time in a target mesh - event population two periods before the target time in the target mesh. The data of the number of times of boarding in a previous period is the number of times of boarding one period before a target time in a target mesh. The weather data is a value of weather one period before a target time in a target mesh. The demographics pattern data is a ratio of event population for each piece of demographics one period before a target time in a target mesh. For example, in a case of the male ratio, the demographics pattern data is the sum of male event population from the start of an event session in a target mesh to one period before a target time / the sum of a total event population from the start of the event session in the target mesh to one period before the target time. For this demographics pattern data, values for all demographics may be used. Further, a ratio of event population for each combination of two different types of demographics, such as male x young, and a ratio of event population for each combination of three different types of demographics, such as male x young x municipality may be used.

For example, the prediction model generation unit 11 calculates a model coefficient which is a coefficient of each explanatory variable by maximum likelihood estimation from a value based on event data that is an explanatory variable for each cluster by using a general linear model, and generates a prediction model.

Further, the prediction model generation unit 11 may select an explanatory variable by using a stepwise method. That is, the prediction model generation unit 11 may employ, as an explanatory variable, demographics pattern data that is most appropriate in Akaike's Information Criterion (AIC) by using a prediction model obtained by adding demographics pattern data, piece by piece, as an explanatory variable to a prediction model in which event population data, population difference data, data of the number of times of boarding in a previous period, and weather data are indispensable explanatory variables.

The above prediction model predicts, from event data (explanatory variable) up to a time on the way in an event session, the number of times of boarding (objective variable) at a time one period after. However, the prediction model may predict the number of times of boarding (objective variable) after the above, that is, at a time two periods after and subsequent times. Further, as for the data corresponding to explanatory variables other than the demographics pattern data, not only data one period before a target time and two periods before the target time among values based on event data, but also all pieces of the event data up to the time on the way in the event session may be used. Further, data other than the above example may be used as an explanatory variable. Further, a prediction model other than that described above generated by a method other than the above method may be used, as long as the prediction model is generated by using event data for each cluster.

The prediction model generation unit 11 generates representative data and threshold value data for each cluster. The representative data is centroid data of each cluster. The threshold value data is data prepared for calculating a maximum distance away from a centroid (representative data) of each cluster. The representative data and the threshold value data are used for determining a prediction model (cluster) that performs demand prediction.

The prediction model generation unit 11 calculates an average (centroid) of values of each item of data used for clustering of event data, that is, event population in time series (an event population waveform) and demographics ratio data, and sets the average as the representative data. That is, a total value for each item of data used for clustering event data belonging to the same cluster / a value of the number of pieces of event data (the number of event sessions) included in a cluster is set as the representative data. An average of event population is calculated for each time (session time label). If the number of pieces of event data included in a cluster is one (the number of samples is one), data relating to the one piece of event data is the representative data. If the number of pieces of event data included in a cluster is two or more (the number of samples is two or more), an average of data relating to the two or more pieces of event data is the representative data. The prediction model generation unit 11 calculates a value of the representative data of each item + a value of the standard deviation × 2 for each item, and sets the value as the threshold value data.

The prediction model generation unit 11 stores generated information in the demand prediction device 10, and makes the information available to the prediction model determination unit 13 and the prediction unit 14 at the time of prediction. It should be noted that the generated information is made identifiable by, for example, setting an identifier as to which cluster it belongs to.

The configuration may be such that, for a prediction model of each cluster generated by the prediction model generation unit 11, verification of prediction accuracy is performed based on information used for generating the prediction model, and only one that has been able to predict with sufficient accuracy is employed as a prediction model used for demand prediction.

The acquisition unit 12 is a functional unit that acquires number-of-people information including information relating to the number of people for each mesh at a plurality of times when demand prediction for taxi demand is performed in the demand prediction device 10. The acquisition unit 12 acquires the number-of-people information including information indicating attributes of a person for each mesh. The acquisition unit 12 acquires number-of-people information including information indicating a difference between a value indicating the number of people for each mesh at a plurality of times and a predetermined reference value as information relating to the number of people. Specifically, the acquisition unit 12 acquires the number-of-people information as described below.

The acquisition unit 12 acquires the number-of-people information for each mesh which is time-series information. The number-of-people information acquired by the acquisition unit 12 is information of a format similar to that of the number-of-people information for generating a model. The acquisition unit 12 acquires the number-of-people information in a similar manner as acquisition of the number-of-people information for generating a model by the prediction model generation unit 11. However, since the number-of-people information is information used for demand prediction for taxi demand as described above, number-of-people information in real time or close to real time is acquired. Further, the number-of-people information may include information relating to a predicted population of each mesh at a future time, and the like. The prediction is performed by a conventional method based on, for example, a history of population at or before a time to be predicted, and the like. The prediction may be performed in the demand prediction device 10 or may be performed in other devices. Further, when predicted number-of-people information is used, information predicted by a conventional method or the method according to the present embodiment may be used for other information described below used for demand prediction. Further, the acquisition unit 12 acquires information used for demand prediction in addition to the number-of-people information. For example, the acquisition unit 12 acquires information indicating weather in a mesh at each time and an actual value of the number of times of boarding a taxi as the information. That is, the acquisition unit 12 acquires information similar to that of the format shown in FIG. 2. The acquisition unit 12 outputs the acquired information to the prediction model determination unit 13.

The prediction model determination unit 13 is a functional unit that determines a prediction model to be used for demand prediction from the plurality of prediction models generated by the prediction model generation unit 11 based on the number-of-people information acquired by the acquisition unit 12. The prediction model determination unit 13 identifies an inflow state indicating an inflow of people in a mesh at each of a plurality of times from the number-of-people information, and identifies a range of the number-of-people information to be used for determining a prediction model and demand prediction from the identified inflow state. Specifically, the prediction model determination unit 13 determines a prediction model to be used for demand prediction as described below.

The prediction model determination unit 13 inputs information from the acquisition unit 12. The prediction model determination unit 13 determines whether or not acquired information on each cube input from the acquisition unit 12 constitutes an event session. The determination is performed in a similar manner as the determination by the prediction model generation unit 11.

When the prediction model determination unit 13 determines that a phase of a cube relating to a latest time is staying, after that, the demand prediction device 10 performs demand prediction for taxi demand in the mesh at a next time (for example, a time 10 minutes after) by using event data up to that point constituting an event session. Demand prediction for taxi demand is performed at this timing because taxi demand is considered to be high in a period during which a phase of people in a mesh is from staying to outflow.

When it is determined that a phase of a cube relating to a latest time is staying, the prediction model determination unit 13 generates (prepares) data of a format similar to that of data used for the above clustering, that is, time series event population (an event population waveform) and demographics ratio data, from event data up to that point constituting an event session.

The prediction model determination unit 13 determines which cluster the event data belongs to by using the generated data. That is, the prediction model determination unit 13 determines a prediction model of which cluster is to be used for demand prediction. Specifically, the prediction model determination unit 13 calculates a distance between generated data and the representative data of each cluster. For example, the distance is calculated by using a calculation formula of the Ward's method. That is, distance = (the number of cluster samples / (1 + the number of cluster samples)) x (a Euclidean distance between generated data and the representative data of a cluster) is calculated. Note that, for the event population of the representative data of a cluster to be used at the time of calculation of a distance, data of only a period length of an event session of generated data from the head of the session time label is used. The number of data of the generated data and the representative data of each cluster are the same, that is, a vector of the same number of elements. The above similarly applies to calculation of a distance described below.

The prediction model determination unit 13 sets a cluster having a shortest calculated distance as a cluster to be a candidate to which the event data belongs. Next, the prediction model determination unit 13 calculates a distance between the generated data and the threshold value data of the candidate cluster. For example, the distance is a Euclidean distance between generated data and the threshold value data of a cluster. The prediction model determination unit 13 compares the calculated distance as a threshold value with a shortest distance that is a distance between generated data and the representative data of a candidate cluster. As a result of the comparison, if the shortest distance ≤ the threshold value, the prediction model determination unit 13 determines that the event data belongs to the cluster. In this case, a prediction model of the cluster is used to perform demand prediction. That is, determining a belonging cluster corresponds to determining a prediction model to be used for demand prediction. The prediction model determination unit 13 outputs event data to the prediction unit 14 and also notifies the cluster.

As a result of the comparison, if the shortest distance > the threshold value, the prediction model determination unit 13 determines that there is no cluster to which the event data belongs. In this case, demand prediction using a prediction model of a cluster is not performed. The determination using a threshold value described above is for determining whether event data is as close to a cluster as that demand prediction can be performed by using a prediction model of the cluster.

The prediction unit 14 is a functional unit that performs demand prediction for taxi demand from the number-of-people information acquired by the acquisition unit 12 by using the prediction model determined by the prediction model determination unit 13. The prediction unit 14 receives input of event data from the prediction model determination unit 13 and also receives a notification of a cluster. The prediction unit 14 reads out a prediction model of the notified cluster. The prediction model to be read out is used for predicting the number of times of boarding at a time (session time label) next a session time label corresponding to a latest time of event data.

The prediction unit 14 generates (prepares) a value to be used as an explanatory variable to be input to a prediction model from the event data input from the prediction model determination unit 13. These values are for predicting the number of times of boarding at a next time of a latest time of the event data. Specifically, these values are event population data, population difference data, data of the number of times of boarding in a previous period, weather data, and demographics pattern data. The event population data is event population at a latest time in a target mesh. The population difference data is a value obtained from event population at a latest time in a target mesh - event population one period before the latest time in the target mesh. In a case where population at a future time can be predicted, the future time may be used as a latest time. The data of the number of times of boarding in a previous period is the number of times of boarding at a latest time in a target mesh. The weather data is a value of weather at a latest time in a target mesh. The demographics pattern data is a ratio of event population for each piece of demographics at a latest time in a target mesh. Only demographics pattern data employed as an explanatory variable in a prediction model needs to be generated.

The prediction unit 14 inputs these values to the readout prediction model, and calculates the number of times of boarding. The prediction unit 14 outputs the calculated number of times of boarding and information indicating a mesh and a time of a prediction target to the output unit 15 as a result of demand prediction. At this time, information indicating an event ID, a phase at a latest time of event data, the session time label, and a cluster (a population waveform cluster, a demographics ratio cluster) to which the event data belongs may also be output.

The output unit 15 is a functional unit that outputs information corresponding to a result of demand prediction performed by the prediction unit 14. The output unit 15 receives input of information relating to a prediction result from the prediction unit 14. For example, the output unit 15 transmits and outputs, for example, the information input from the prediction unit 14 to a terminal of a business operator of a taxi. Alternatively, the output unit 15 may transmit the information of a mesh for which a certain number or more of times of boarding is predicted to a terminal of a business operator of a taxi. Note that output from the output unit 15 is not limited to the above, and optional output can be performed. The above is the function of the demand prediction device 10.

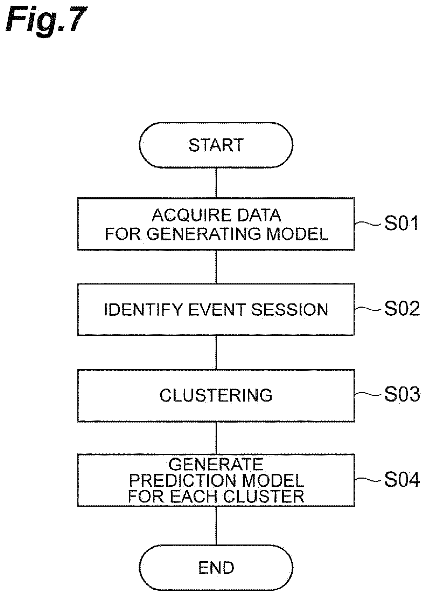

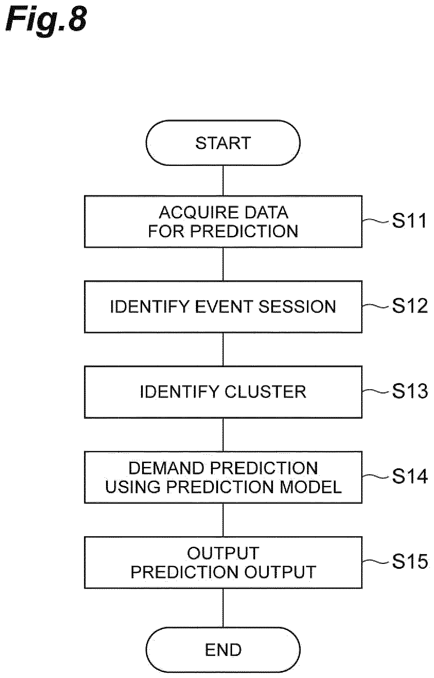

Next, the processing executed by the demand prediction device 10 (operation method performed by the demand prediction device 10) according to the present embodiment will be described with reference to flowcharts of FIGS. 7 and 8. First, with reference to the flowchart of FIG. 7, processing when a prediction model is generated will be described.

In the present processing, first, the prediction model generation unit 11 acquires information used for generating a prediction model (S01). As shown in FIG. 2, the information is information, in which a mesh code, time, various types of population, weather, and the number of times of boarding are associated. Next, the prediction model generation unit 11 determines whether or not the acquired information regarding each cube constitutes an event session (S02). Information determined to constitute an event session is extracted as event data used for generating a prediction model.

Next, clustering of the event data is performed by the prediction model generation unit 11 (S03). As described above, clustering based on an event population waveform and clustering by a demographics ratio are performed for the event data divided for each period length of the event session. Next, the prediction model generation unit 11 generates a prediction model from the event data for each cluster obtained by the clustering (S04). In addition, the representative data and the threshold value data are generated for each cluster. Information such as the generated prediction model and the like is stored in the demand prediction device 10. The above is the processing performed when a prediction model is generated.

Next, with reference to the flowchart of FIG. 8, processing when demand prediction is performed will be described. First, the acquisition unit 12 acquires information used for demand prediction (S11). The information is similar to information of the format shown in FIG. 2. Next, the prediction model determination unit 13 determines whether or not the acquired information regarding each cube constitutes an event session (S12). Information determined to constitute an event session is extracted as event data used for demand prediction.

Next, the prediction model determination unit 13 determines a cluster to which event data belongs based on the event data. The determination is made based on a distance between data based on event data and the representative data of a cluster as described above.

Next, a prediction model of the determined cluster is used by the prediction unit 14 to perform demand prediction for taxi demand based on the event data (S14). Next, the output unit 15 outputs information corresponding to a result of the demand prediction performed by the prediction unit 14 (S15). The above is the processing when demand prediction is performed.

As described above, in the present embodiment, a prediction model to be used for demand prediction is determined based on the number-of-people information in time series, so that demand prediction is performed. Therefore, according to the present embodiment, it is possible to perform demand prediction in accordance with the number-of-people information in consideration of a way a taxi is used. That is, according to the present embodiment, it is possible to perform demand prediction for taxi demand with high accuracy in accordance with a change in an actual number of people, rather than merely in consideration of an event to be held, even in an unusual case.

As described above, in the present embodiment, demand prediction is performed in accordance with a change in an actual number of people. Accordingly, it is possible to predict taxi demand (unusual demand) that deviates from a periodic movement in the past. In particular, according to the present embodiment, demand prediction can be performed in consideration of not only major events, such as professional baseball and a large-scale exhibition, but also minor events for which no usage result of a taxi has been apparent. That is, by prediction performed by the demand prediction device 10, it is possible to detect taxi demand which is not normally noticed.

Further, the configuration may be such that, as in the present embodiment, a phase in the inflow state showing inflow of people is identified from the number-of-people information, and event data to be used for generation of a prediction model and demand prediction is identified. According to this configuration, event data can be identified appropriately, and, as a result, appropriate demand prediction can be performed.

Further, as in the present embodiment, demand prediction may be performed by using demographics data. According to this configuration, more appropriate demand prediction can be performed in consideration of demographics of people as well. Further, if it is possible to use demographics data, appropriate demand prediction can be performed even when the number of times relating to data used for prediction is small, that is, even when the number of samples is small. However, demand prediction may be performed without using demographics data.

Further, as in the present embodiment, for example, demand prediction may be performed by using event population obtained by subtracting a predetermined reference value from model population. According to this configuration, for example, it is possible to perform more appropriate demand prediction in consideration of population in a steady state. However, demand prediction may be performed based on model population without using event population.

Further, as in the present embodiment, the demand prediction device 10 may have a function of generating a prediction model. Accordingly, one embodiment of the present invention can be implemented more appropriately and reliably. However, generation of a prediction model is not necessarily performed by the demand prediction device 10, and the demand prediction device 10 may perform demand prediction by using a prediction model prepared in advance.

Note that, in the present embodiment, a vehicle for which demand prediction is performed is a taxi. However, the vehicle does not need to be a taxi, and demand prediction may be performed for any vehicle as long as the vehicle is in demand in accordance with an optional position.

It should be noted that a block diagram used in the description of the above embodiment shows blocks in units of functions. These functional blocks (constituent parts) are obtained by an optional combination of hardware and/or software. Further, means for obtaining each functional block is not particularly limited. That is, each functional block may be obtained by one device physically and/or logically combined, or two or more devices physically and/or logically separated may be directly and/or indirectly connected (for example, by wire and/or by radio), and may be obtained by a plurality of these devices.

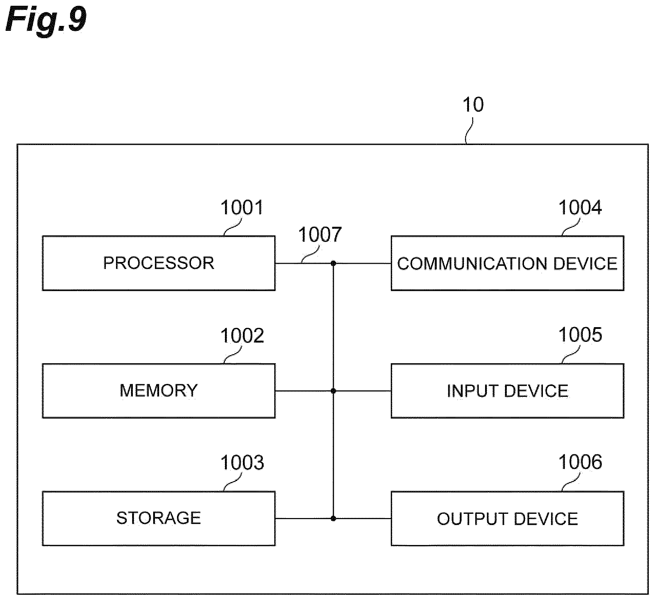

For example, the demand prediction device 10 according to an embodiment of the present invention may function as a computer that performs processing of the demand prediction device 10 of the present embodiment. FIG. 9 is a diagram showing an example of a hardware configuration of the demand prediction device 10 according to the present embodiment. The above-described demand prediction device 10 may be physically configured as a computer device including a processor 1001, a memory 1002, a storage 1003, a communication device 1004, an input device 1005, an output device 1006, a bus 1007, and the like.

Note that, in description below, the term "device" can be read as a circuit, device, unit, or the like. The hardware configuration of the demand prediction device 10 may be configured to include one or a plurality of devices shown in the drawings or may be configured without including part of the devices.

Functions of the demand prediction device 10 are obtained by allowing hardware, such as the processor 1001, the memory 1002, and the like, to read predetermined software (programs), so that the processor 1001 performs calculations and controls communication by the communication device 1004, and reading and/or writing of data in the memory 1002 and the storage 1003.

For example, the processor 1001 operates an operating system to control an entire computer. The processor 1001 may be configured with a central processing unit (CPU) including an interface with a peripheral device, a control device, an arithmetic device, a register, and the like. For example, each of the functional units 11 to 15 of the demand prediction device 10 may be obtained by including the processor 1001.

Further, the processor 1001 reads out a program (program code), a software module, and data from the storage 1003 and/or the communication device 1004 to the memory 1002, and executes various types of processing according to them. As the program, a program for causing a computer to execute at least part of the operation described in the above embodiment is used. For example, the functional units 11 to 15 of the demand prediction device 10 may be realized by a control program stored in the memory 1002 and operating with the processor 1001. Although it has been described that the above-described various types of processing are executed by one of the processor 1001, it may be executed simultaneously or sequentially by two or more of the processors 1001. The processor 1001 may be implemented with one or more chips. It should be noted that the program may be transmitted from a network via an electric communication line.

The memory 1002 is a computer readable recording medium and is configured with, for example, at least one of a read only memory (ROM), an erasable programmable ROM (EPROM), an electrically erasable programmable ROM (EEPROM), a random access memory (RAM). The memory 1002 may be referred to as a register, a cache, a main memory (main storage device), or the like. The memory 1002 can store a program (program code), a software module, and the like that are executable for implementing the method according to an embodiment of the present invention.

The storage 1003 is a computer readable recording medium, and may be configured with at least one of an optical disk, such as a compact disc ROM (CD-ROM), a hard disk drive, a flexible disk, a magneto-optical disk (for example, a compact disk, a digital versatile disk, a Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The above-described storage medium may be, for example, a database including the memory 1002 and/or the storage 1003, a server, or other appropriate media.

The communication device 1004 is hardware (transmitting and receiving device) for performing communication between computers via a wired and/or radio network, and is also referred to, for example, as a network device, a network controller, a network card, a communication module, or the like. For example, each of the functional units 11 to 15 of the above-described demand prediction device 10 may be obtained by including the communication device 1004.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs output to the outside. Note that the input device 1005 and the output device 1006 may be integrated (for example, a touch panel).

Further, each of devices, such as the processor 1001 and the memory 1002, are connected by the bus 1007 for communicating information. The bus 1007 may be configured with a single bus or may be configured with buses that are different between devices.

Further, the demand prediction device 10 be configured by including hardware, such as a microprocessor, a digital signal processor (DSP), an application specific integrated circuit (ASIC), a programmable logic device (PLD), and a field programmable gate array (FPGA), and part or all of each functional block may be obtained by the hardware. For example, the processor 1001 may be implemented with at least one of these pieces of hardware.

Although the present embodiment has been described in detail above, it is obvious to those skilled in the art that the present embodiment is not limited to the embodiments described in the present description. The present embodiment can be implemented as modifications and variations without deviating from the spirit and scope of the present invention as defined by the scope of claims. Therefore, the description of the present description is for the purpose of illustration and does not have any restrictive meaning to the present embodiment.

Notification of information may is not limited to the aspects/embodiments described in the present description, and may be performed by other methods. For example, notification of information may be performed by physical layer signaling (for example, downlink control information (DCI), uplink control information (UCI)), upper layer signaling (for example, radio resource control (RRC) signaling, medium access control (MAC) signaling, or information notification (a master information block (MIB), a system information block (SIB))), other signals, or a combination of these. Further, the RRC signaling may be referred to as an RRC message, and may be, for example, an RRC connection setup message, an RRC connection reconfiguration message, or the like.

As long as there is no inconsistency, the order of pieces of processing, sequences, flowcharts, and the like in each of the aspects/embodiments described in the present description may be changed. For example, for the methods described in the present description, elements of various steps are presented in an exemplary order, and are not limited to the specific order presented.

Input and output information and the like may be stored in a specific location (for example, a memory) or managed in a management table. Input and output information and the like may be overwritten, updated, or additionally written. Output information, and the like may be deleted. Input information, and the like may be transmitted to another device.

The determination may be made by a value (0 or 1) expressed by 1 bit, by a boolean value (true or false), or by comparing numerical values (for example, comparing with a predetermined value).

Each of the aspects/embodiments described in the present description may be used alone, or in combination, or may be switched in accordance with execution. Further, notification of predetermined information (for example, notification of "being X") is not limited to notification performed explicitly, but may be performed implicitly (for example, by not notifying the predetermined information).

The software needs to be interpreted broadly so as to mean an instruction, an instruction set, a code, a code segment, a program code, a program, a subprogram, a software module, an application, a software application, a software package, a routine, a subroutine, an object, an executable file, an execution thread, a procedure, a function, and the like, regardless of whether the software is referred to as software, firmware, middleware, a microcode, or a hardware description language, or another name.

Further, software, an instruction, and the like may be transmitted and received via a transmission medium. For example, in a case where the software is transmitted from a website, a server, or other remote resources by using wired techniques, such as a coaxial cable, an optical fiber cable, a twisted pair, a digital subscriber line (DSL) and/or radio techniques, such as infrared, radio, microwave, and the like, these wired techniques and/or radio techniques are included within the definition of the transmission medium.

The information, a signal, and the like described in the present description may be expressed by using any of a variety of different techniques. For example, data, an instruction, a command, information, a signal, a bit, a symbol, a chip, and the like that may be mentioned throughout the above description may be expressed by a voltage, a current, an electromagnetic wave, a magnetic field or a magnetic particle, an optical field or a photon, or an optional combination of these.

It should be noted that the terms described in the present description and/or terms necessary for understanding the present description may be replaced with terms having the same or similar meanings. For example, the channel and/or symbol may be a signal. Further, the signal may be a message. Further, the component carrier (CC) may be referred to as a carrier frequency, a cell, or the like.

The terms "system" and "network" as used in the present description are used interchangeably.

Further, the information, a parameter, and the like described in the present description may be expressed as an absolute value, may be expressed as a relative value from a predetermined value, or may be expressed by other corresponding information. For example, the radio resources may be indicated by an index.

The name used for the above parameter is not limited in any way. Moreover, a mathematical expression, and the like using these parameters may be different from those explicitly disclosed in the present description. Since the various channels (for example, PUCCH, PDCCH, and the like) and the information element (for example, TPC, and the like) can be identified by any suitable name, the various names assigned to these various channels and information elements are not limited in any way.

A mobile communication terminal may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

The term "determining" used in the present description may encompass a wide variety of operations. "Determining" may include, for example, judging, calculating, computing, processing, deriving, investigating, looking up (for example, searching in a table, a database, or other data structures), and "ascertaining" which are deemed to be "determining". Further, "determining" may include "receiving" (for example, receiving information), transmitting (for example, transmitting information), input, output, and accessing (for example, accessing data in a memory), which are deemed to be "determining". Further, "determining" may include resolving, selecting, choosing, establishing, comparing, and the like which are deemed to be "determining". That is, "determining" may include some operation which is deemed to be "determining".

The terms "connected", "coupled", or any variation of these terms, mean any direct or indirect connection or coupling between two or more elements, and may include presence of one or more intermediate elements between two elements that are "connected" or "coupled". The coupling or connection between elements may be physical, logical, or a combination of these. When used in the present description, two elements can be considered to be "connected" or "coupled" with each other by using one or more wires, cables and/or printed electrical connections, and, as some non-limiting and exclusive examples, by using electromagnetic energy having a wavelength of a radio frequency region, a microwave region, and a light (both visible and invisible) region.

The description of "based on" used in the present description does not mean "based only on" unless explicitly stated otherwise. In other words, the description of "based on" means both "based only on" and "based at least on".

In a case where expressions, such as "first", "second", and the like, are used in the present description, any reference to elements for which the expressions are used does not generally restrict the quantity or order of those elements. These expressions may be used in the present description as a convenient way to distinguish between two or more elements. Thus, reference to first and second elements does not mean that only two elements may be employed there, or that the first element must precede the second element in some form.

As long as "include," "including," and variations of these are used in the present description or claims, these terms are intended to be inclusive in a manner similar to the term "comprising". Moreover, the term "or" used in the present description or claims is intended to be not exclusive or.

In the present description, it is intended that a plurality of devices are included, unless the device is obviously only one contextually or technically. In the present disclosure as a whole, a plurality of things are assumed to be included, unless a singular form is clearly shown contextually.

### Reference Signs List

- 10: Demand prediction device
- 11: Prediction model generation unit
- 12: Acquisition unit
- 13: Prediction model determination unit
- 14: Prediction unit
- 15: Output unit
- 1001: Processor
- 1002: Memory
- 1003: Storage
- 1004: Communication device
- 1005: Input device
- 1006: Output device
- 1007: Bus

## Claims

1. A demand prediction device that performs demand prediction for vehicle demand in accordance with a position, the demand prediction device comprising:
an acquisition unit configured to acquire number-of-people information including information relating to the number of people at each position at a plurality of times;
a prediction model determination unit configured to determine a prediction model to be used for demand prediction based on the number-of-people information acquired by the acquisition unit;
a prediction unit configured to perform demand prediction for vehicle demand from the number-of-people information acquired by the acquisition unit by using the prediction model determined by the prediction model determination unit; and
an output unit configured to output information in accordance with a result of demand prediction performed by the prediction unit.

2. The demand prediction device according to claim 1, wherein
the prediction model determination unit identifies an inflow state showing inflow of people at the position at each of the plurality of times from the number-of-people information, and identifies a range of the number-of-people information to be used for determination of a prediction model and demand prediction from the identified inflow state.

3. The demand prediction device according to claim 1 or 2, wherein
the acquisition unit acquires number-of-people information including information indicating attributes of people for each position.

4. The demand prediction device according to any one of claims 1 to 3, wherein
the acquisition unit acquires number-of-people information including information indicating a difference between a value indicating the number of people at each position at a plurality of times and a predetermined reference value as information relating to the number of people.

5. The demand prediction device according to any one of claims 1 to 4, further comprising:
a prediction model generation unit configured to acquire a plurality of pieces of number-of-people information for generating a model including information relating to the number of people at each position at a plurality of times, and demand information indicating a vehicle demand amount for each position at times corresponding to the plurality of times, cluster the acquired number-of-people information for generating a model, and generate a prediction model from the number-of-people information for generating a model and the demand information for each cluster obtained by the clustering, wherein
the prediction model determination unit determines a prediction model to be used for demand prediction from a plurality of the prediction models generated by the prediction model generation unit based on the number-of-people information acquired by the acquisition unit.

6. The demand prediction device according to claim 5, wherein
the prediction model generation unit identifies an inflow state showing inflow of people at the position at each of the plurality of times from the number-of-people information for generating a model, and identifies a range of the number-of-people information for generating a model to be used for generation of a prediction model from the identified inflow state.
